**Europäisches Patentamt**

**European Patent Office**

**Office européen des brevets**

(19)

(11) Publication number : **0 109 408 B2**

(12) # NEW EUROPEAN PATENT SPECIFICATION

(45) Date of publication of the new patent specification : **19.08.92 Bulletin 92/34**

(51) Int. Cl.⁵ : **C09K 21/00, C09K 21/02, C09K 21/06**

(21) Application number : **83901408.1**

(22) Date of filing : **04.05.83**

(86) International application number : **PCT/NO83/00017**

(87) International publication number : **WO 83/04041 24.11.83 Gazette 83/27**

(54) **FIRE RESISTANT MATERIAL.**

The file contains technical information submitted after the application was filed and not included in this specification

(30) Priority : **07.05.82 NO 821503**
**17.09.82 NO 823151**
**21.12.82 US 451833**
**04.03.83 US 472254**

(43) Date of publication of application :
**30.05.84 Bulletin 84/22**

(45) Publication of the grant of the patent :
**26.08.87 Bulletin 87/35**

(45) Mention of the opposition decision :
**19.08.92 Bulletin 92/34**

(84) Designated Contracting States :
**AT BE CH DE FR LI LU NL SE**

(56) References cited :
**EP-A- 0 004 017**
**WO-A-80/02086**
**DE-A- 2 457 980**
**DE-A- 2 847 923**
**DE-A- 2 900 535**

(56) References cited :
**US-A- 4 095 985**
**Patent Abstract of Japan, 31 May 1977 & JP-A-50-141739**
**Patent Abstract of Japan, 21 October 1977 & JP-A-51-42762**
**Patent Abstract of Japan, 6 January 1978 & JP-A-51-73990**

(73) Proprietor : **A/S NORSK KABELFABRIK**
**Kjerraten 16**
**N-3001 Drammen (NO)**

(72) Inventor : **HORDVIK, Jan**
**Store Landfall 73**
**N-3000 Drammen (NO)**
Inventor : **PERSSON, Wilfred Lovenskjold**
**Ltz. Gronlandsv. 37B**
**N-3000 Drammen (NO)**
Inventor : **PEDERSEN, Narve Skaar**
**P. Osc. gt. 32L**
**N-3000 Drammen (NO)**
Inventor : **KRISTIANSEN, Arvid**
**Einar Aass vei**
**N-3000 Drammen (NO)**

(74) Representative : **Geering, Keith Edwin et al**
**REDDIE & GROSE 16 Theobalds Road**
**London WC1X 8PL (GB)**

**EP 0 109 408 B2**

Jouve, 18, rue Saint-Denis, 75001 PARIS

## Description

The present invention relates to a fire or flame resistant material. More particularly, the invention relates to a high temperature, heat barrier material having selective, thermoprotective properties at elevated temperatures.

## Background of the Invention

Heretofore, various materials have been proposed as flame or fire retardants. For instance, in the field of fire resistant cable transits, such materials based on neoprenes, silicon foam, inorganic molding materials and mineral wool mats have been utilized. While these known materials exhibit various useful insulation and resistance to fire hazard properties, none of them, simultaneously, exhibit (1) good thermal conductivity under normal use conditions, (2) expansion and plugging properties at elevated temperatures and (3) heat insulating and mechanical protective properties at very high temperatures, such as are encountered during a fire.

The present invention, however, is directed to a fire or flame resistant material which, in addition to exhibiting the above-mentioned characteristics, also has, simultaneously, additional operational and flame or fire resistant properties, and is capable of being produced using relatively inexpensive processes and components.

## General Description of the Invention

When exposed to fire or elevated temperatures the material of the present invention exhibits two basic properties which together provide an active heat barrier thereby protecting objects requiring protection:

(1) when heated to certain elevated temperatures, an endothermic reaction occurs. One of the by-products of the reaction is water which, in the course of evaporating, cools down the heat exposed surface; and

(2) the material of the present invention, when directly exposed to elevated temperatures, forms an intumescent layer having a firm, foam ceramic-like structure. This intumescent layer shields the remaining non-exposed portion of the thermoprotective material and has good heat insulating properties at temperatures up to 1260°C (2300°F) and higher.

The heat barrier properties of the fire or flame resistant material of the present invention are present only at temperatures above 480°F (250°C). Below this temperature, the material of the present invention is a relatively good heat conductor, thereby dissipating excess heat.

On heating the material of the present invention at the appropriate elevated temperature, the intumescent layer is formed in the material close to the heat source while the portion of the material more remote from the heat source undergoes only the aforementioned endothermic reaction and does not advance to the intumescent stage.

The fire or flame resistant material of the present invention, which is halogen free, gives off a low amount of light gray smoke during a fire. In a test of its heat protection capabilities a 127 mm x 127 mm (5″ x 5″) x 9.5 mm (3/8″) thick specimen when exposed to 1204°C (2200°F) on one side, the temperature on the non-exposed side did not exceed 232°C (450°F) after 30 minutes of exposure.

The flame or fire resistant material of the present invention, in one embodiment, can be a thermoplastic material that can be extruded, molded and machined. The material of this invention can be rigid or flexible to a certain extent (20% elongation at break). It can also be laminated or reinforced with conventional materials.

The flame or fire resistant material of the present invention is usefully employed, for instance, in the production of walls, floors, ceilings, rooms and cabins where fire protection is required or desired. It can also be employed as a protective covering or coating for mechanical and electrical equipment such as electrical cabinets or housings, fittings, pipes, hoses, cables, panels, cable transits, doors and hatches. Moreover, it is usefully employed in the production of coverings, for tanks and pipes housing or carrying explosive contents and found in chemical plants, refineries, vehicles, ships and aircraft.

The flame or fire resistant material of the present invention can also take the form of granules, said granules being manufactured as such or being provided as sub-divided extrudates. These granules, having either a spherical or any appropriate shape and dimensions, may conveniently be used as an insulating material between an inner and an outer surface of a storage unit, such as a storage tank or vessel, especially of larger sizes. Due to the granular form of the flame or fire resistant material, it can easily fill in any space between said surfaces, the shape and dimensions of the granules as well as their property as a bulk material giving the appropriate density of the insulating materials.

In its granular form, the flame or fire resistant material will during normal conditions constitute a "resilient" insulation allowing for certain differences between the inner and the outer surfaces, as regards variation in structural tolerances and thermal expansions. If a fire should occur, the granules will as a result of the elevated temperature, provide an active heat barrier as explained above. Due to the loose storage of the granules, the granules will during a fire be allowed to expand and fuse together, so as to finally form a firm, intumescent intermediate layer without imparting undue pressure on said surfaces.

Detailed Description of the Invention

The fire or flame resistant material of the present invention is substantially halogen-free and comprises an organic polymer matrix; 50-150 parts by weight of filler material comprising aluminum hydroxide per 100 parts of said matrix; and 100-600 parts by weight of calcium carbonate or calcium-magnesium carbonate per 100 parts of said matrix.

The fire or flame resistant material of the present invention can also contain 30-40 parts by weight one or more of a lubricating agent, an elasticizer, a drying agent, a color-aging agent or an antioxidant agent, per 100 parts of said matrix.

The choice of any particular composition can depend on how the ultimate material is to be worked, for example, molded, injected, extruded, or produced as a coating material to be applied to the object to be protected against fire or heat.

In the present invention the matrix of the fire or flame resistant material is an organic polymer, preferably an ethylene-ethyl acrylate copolymer. In this preferred embodiment the filler material comprises aluminium hydroxide with up to 200 parts by weight thereof capable of being replaced by mica, per 100 parts of said organic polymer matrix. A minimum of 50 parts by weight of aluminium hydroxide is always present. Also in this preferred embodiment, 0-100 parts by weight of the calcium carbonate can be replaced by sodium silicate. Again a minimum of 100 parts by weight of calcium carbonate is always present. The lubricating agent is paraffin wax present in an amount of about 10 parts by weight per 100 parts of said copolymer matrix.

Moreover, in this preferred embodiment, the elasticizer is ethylene propene rubber present in an amount of about 11 parts by weight per 100 parts of said copolymer matrix and the drying agent is an admixture of calcium oxide and wax present in an amount of about 11 parts by weight per 100 parts of said copolymer matrix.

Further, in this preferred embodiment, the coloraging agent is carbon black present in an amount of about 1 part by weight and the antioxidation agent is poly trimethyl dihydroquinolin, present in an amount of about 1.5 parts by weight, each based on 100 parts of said copolymer matrix.

In still another embodiment of the present invention the fire or flame resistant material can be rigid. In this embodiment the material comprises, per 100 parts of organic matrix, preferably ethylene-ethyl acrylate, 50 to 450 parts by weight of a filler material comprising aluminum hydroxide, 100 to 600 parts by weight of a member selected from the group consisting of calcium carbonate and calcium-magnesium carbonate, 8 to 15 parts by weight of a lubricating agent, 8 to 15 parts by weight of an elasticizer, 10 to 15 parts by weight of a drying agent, 1 to 2 parts by weight of a coloring agent and 0 to 1.5 parts by weight of an antioxidant.

A representative rigid fire or flame resistant material of the present invention is one containing, per 100 parts of ethylene-ethyl acrylate, as the matrix, 220 parts by weight of aluminum hydroxide, 220 parts by weight of calcium carbonate, 10 parts by weight of a lubricant, 11 parts by weight of an elasticizer, 11 parts by weight of a drying agent, 1 part by weight of a coloring agent and 1.5 parts by weight of an antioxidant.

In yet another embodiment of the present invention the fire or flame resistant material can be flexible. In this embodiment the material comprises, per 100 parts of organic matrix, again preferably ethylene-ethyl acrylate, 130 to 170 parts by weight of a filler material comprising aluminum hydroxide, 130 to 170 parts by weight of a member selected from the group consisting of calcium carbonate and calcium-magnesium carbonate, 8 to 15 parts weight of a lubricating agent, 25 to 40 parts by weight of an elasticizer, 10 to 15 parts by weight of a drying agent, 1 to 2 parts by weight of a coloring agent and 0 to 1,5 parts by weight of an antioxidant.

A representative flexible fire or flame resistant material in accordance with the present invention is one containing 80 parts by weight of ethylene-ethyl acrylate, as the matrix, 150 parts by weight of aluminum hydroxide, 150 parts by weight of calcium carbonate, 10 parts by weight of a lubricant, 30 parts by weight of an elasticizer, 11 parts by weight of a drying agent, and 1 part by weight of a coloring agent.

When the material od the present invention is used for the production of fire resistant cable transits it will expand due to the presence therein of aluminum hydroxide, under the influence of intense heat, for example, fire or radiated heat, such that the material blocks any permeation of smoke, warm gases and flames along the transist. If a portion of the aluminum hydroxide is replaced with mica, whether natural or hydrated, the degree of expansion can be varied within fairly wide limits, since the addition of mica imparts to the material a dough-like consistency and provides greater expansion of the material at high temperatures.

In addition, the function of the aluminum hydroxide as an expansion agent can be partially replaced and regulated with an organic expansion agent, such as, azodicarbonamide.

At temperatures above the combustion temperature of the organic components, e.g., in a fire situation, the fire resistant material of the present invention forms a strong intumescent layer having good thermal insulation properties and high thermal stability, i.e., it will withstand heat up to temperatures of 1100°C. The intumescent layer contributes to an effective thermal and mechanical insulation of the articles or objects coated or covered with the material of this invention.

Before burning, the material of this invention is elastic and is very resistant to vibrations and mechanical loads.

Yet another alternative is to use as the matrix a component such that the finished product can be employed to coat or paint the object to be protected from fire. Such a component is, for example, a solution or suspension of an alkyd, a polyurethane, a vinyl acetate, an acrylate or the like.

The present invention also relates to a method for producing the fire or flame resistant material defined above, said process comprising mixing the components thereof, dry, at ambient temperature, extruding the resulting admixture at a fusion temperature of about 150-200°C to form extrudates in continuous form and subdividing said extrudates.

The extrudates in continuous form, e.g. string-like form, can be cut into smaller lengths or cubes for temporary storage. These subdivided extrudates can then be extruded at a temperature of about 150-200°C so as to produce covers for the articles or objects to be protected from fire.

Moreover, the flame or fire resistant material of the present invention can easily be extruded to form coatings for cables which are exposed, or more importantly, for cables hidden in walls.

Tests made with the flame or fire resistant material of the present invention show that, for a class A fire test, the material withstood fire for 180 minutes, at which point the test was stopped. By comparison, known PVC materials under essentially the same class A fire test conditions withstood fire for only about 60 minutes at which point the PVC material chemically decomposed and produced dangerous chlorine gas.

In still another preferred embodiment of the present invention, the flame or fire resistant material comprises 90-140 parts by wieght of a polymeric matrix material, 14-24 parts by weight of a production lubricating agent, 8-13 parts by weight of calcium oxide, 140-160 parts by weight of calcium carbonate and 140-160 parts by weight of aluminum hydroxide. Moreover this material can also include an effective amount of a color-aging agent, such as carbon black.

The polymeric material comprises preferably, 70-100 parts by weight of ethylene-ethylacrylate copolymer and 20-40 parts by weight of synthetic rubber, e.g. EPDM. The production lubricating agent comprises, preferably, 8-12 parts by weight of polyisobutylene and 6-12 parts by weight of paraffin wax.

The flame or fire resistant material of this embodiment of the invention described immediately above, can be prepared by mixing together the components thereof, essentially in powder form, at a temperature of approximately 30°C to produce a loose admixture. The resulting dry mixture is extruded through a double screw extruder at a temperature of approximately 130°C. The resulting extrudate is partially cooled and fed through a perforated plate to be chopped into granular form at the exit of the plate. The granules can be stored temporarily at room temperature. Thereafter the granules can be processed into pipe or conduit form through an extruder with gradual heating up to 125°C.

The extruded conduit can be provided with a reinforcing coating, and optionally an outer protective cover, made of, for instance, a plastic material.

A conduit made of the flame or fire resistant material reinforced in this manner is especially useful as a flame-resistant shell for electric cables.

The reinforced conduit described above, forms, when exposed to fire conditions, a strong intumescent layer having good thermal insulation properties and high thermal stability. The intumescent layer contributes to an effective thermal and mechanical insulation of the cables housed therein. The intumescent layer is supported by the reinforcing coating.

As an example of a flame or fire resistant material of the present invention, produced especially in the form of a conduit for protecting electric cables, the following components were mixed together at a temperature of about 30°C, the components being essentially in powder form: 80 parts by weight of ethylene-ethyl acrylate copolymer, 30 parts by weight of a synthetic rubber such as EPDM rubber, 10 parts by weight of polyisobutylene, 10 parts by weight of paraffin wax, 11 parts by weight of calcium oxide, 1 part by weight of carbon black, 150 parts by weight of aluminum hydroxide and 150 parts by weight of calcium carbonate. The resulting dry mixture is then fed through a double screw extruder at a temperature of 130°C, and the extrudate, in partially cooled condition, is then fed through a perforated plate and chopped into granular form at the exit from the plate.

The resulting granules can be stored, if necessary, at normal room temperature for later use, or they can be led directly to an extruder with gradual heating to 125°C for extruding into pipe or conduit form.

The extruded conduit is provided with an outer reinforcement after which, the reinforced conduit is covered with an outer protective coating of, for example, polyvinylchloride, if desired.

The polymeric matrix material, i.e. ethyleneethyl acrylate copolymer and the synthetic rubber form the elasticizer components of the resulting conduit, and the relative amounts of these two components can be balanced depending on the degree of elasticity desired relative to the amount of filler material which is to be absorbed in the polymeric mixture. Polyisobutylene is added as an aid in the process of mixing the filler material in the polymeric mixture, and paraffin wax is added as a lubricating agent to give the mixture sufficient pliability during the manufacturing process.

Calcium oxide, which absorbs moisture in the mixture, is added in suitable quantities as a drying agent to reduce the danger of pore effects when the polymeric materials and the various additives are mixed. The calcium oxide also contributes to a more homogeneous mass.

Carbon black is employed as a coloring agent. It also imparts to the mixture a certain degree of protection against oxidation.

The aluminum hydroxide and calcium carbonate, when the material of the invention is exposed to combustion conditions, produce a porous material which does not burn, and the mutual relationship between the additives gives the correct consistency to the foam which occurs on combustion. This foam later stiffens to a strong intumescent layer having good thermal insulation properties and high thermal stability.

The pipe or conduit shaped protective article of the present invention provides good mechanical protection under normal conditions of use and does not produce halogen gases or appreciable smoke upon combustion. Apart from the organic materials, the protective conduit of the present invention does not burn easily and at high temperatures it forms a thermally stable ceramic-like foam intumescent layer which has good thermal insulating properties, and which is held in place with the aid of reinforcement means such as braiding of metal or other conventional material.

Under combustion conditions the chemical reaction produces water which as noted earlier has a cooling effect. The material of the present invention also has a low heat of combustion. The protective conduit of this invention can be made using standard equipment, and is relatively inexpensive due to easily available raw materials.

## Claims

1. A substantially halogen-free fire or flame resistant material comprising organic polymer matrix, 50-450 parts by weight of a filler material comprising aluminum hydroxide per 100 parts of said matrix, and 100-600 parts by weight of material selected from calcium carbonate and calcium-magnesium carbonate per 100 parts of said matrix.

2. The fire or flame resistant material of claim 1 wherein said organic matrix comprises ethylene ethyl acrylate copolymer.

3. The fire or flame resistant material of claim 1 or 2 which also includes 30 -10 parts by weight of one or more of a lubricating agent, an elasticizer, a drying agent, a color-aging agent and an antioxidant agent per 100 parts of said copolymer.

4. The fire or flame resistant material of claims 2 and 3 wherein said lubricating agent comprises paraffin wax present in an amount of about 10 parts by weight per 100 parts of said copolymer, said drying agent comprises an admixture of calcium oxide and wax present in an amount of about 11 parts by weight per 100 parts of said copolymer, said elasticizer comprises ethylene propene rubber present in an amount of about 11 parts by weight per 100 parts of said copolymer, said color-aging agent comprises carbon black present in an amount of about 1 part by weight per 100 parts of said copolymer, and said antioxidant agent comprises poly trimethyl dihydroquinoline present in an amount of about 1.5 parts by weight per 100 parts of said copolymer.

5. The fire or flame resistant material of any preceding claim wherein said filler material also includes an organic expansion agent.

6. A substantially halogen-free rigid fire or flame resistant material comprising per 100 parts of an organic matrix, 50 to 450 parts by weight of a filler material comprising aluminum hydroxide, 100 parts to 600 parts by weight of material selected from calcium carbonate and calciummagnesium carbonate, 8 to 15 parts by weight of a lubricating agent, 8 to 15 parts by weight of an elasticizer, 10 to 15 parts by weight of a drying agent, 1 to 2 parts by weight of a coloring agent and 0 to 1.5 parts by weight of an antioxidant.

7. The rigid fire or flame resistant material of claim 6, comprising 100 parts of ethylene-ethyl acrylate copolymer as the matrix, 220 parts by weight of aluminum hydroxide as a filler, 220 parts by weight of calcium carbonate, 10 parts by weight of a lubricant, 11 parts by weight of an elasticizer, 11 parts by weight of a drying agent, 1 part by weight of a coloring agent and 1.5 parts by weight of an antioxidant.

8. A substantially halogen-free flexible fire or flame resistant material comprising per 100 parts of an organic matrix, 130 to 170 parts by weight of a filler material comprising aluminum hydroxide, 130 to 170 parts by weight of material selected from calcium carbonate and calcium-magnesium carbonate, 8 to 15 parts by weight of a lubricating agent, 25 to 40 parts by weight of an elasticizer, 10 to 15 parts by weight of a drying agent, 1 to 2 parts by weight of a coloring agent and 0 to 1.5 parts by weight of an antioxidant.

9. A substantially halogen-free fire or flame resistant material comprising 80 parts by weight of ethylene-ethyl acrylate copolymer, 30 parts by weight of synthetic rubber, 10 parts by weight of polyisobutylene, 10 parts by weight of paraffin wax, 11 parts by weight of calcium oxide, 1 part by weight of carbon black, 150 parts by weight of aluminum hydroxide and 150 parts by weight of calcium carbonate.

10. A method for producing the fire or flame resistant material of claim 1 comprising mixing the components thereof dry at ambient temperature, extruding the resulting admixture at a fusion temperature of about 150-200°C to form extrudates in continuous form and subdividing said continuous extrudates.

11. A method for producing a fire or flame resistant coating for articles to be protected against fire comprising extruding the subdivided extrudate product of claim 10 at a temperature of about 150-200°C into a desired shape.

12. A substantially halogen-free fire or flame resistant material, comprising 90-140 parts by weight of a polymeric material, 14-24 parts by weight of a lubricating agent, 8-13 parts by weight of calcium oxide, 140-160 parts by weight of calcium carbonate and 140-160 parts by weight aluminum hydroxide.

13. The fire or flame resistant material of claim 12 which also includes an effective amount of a color-aging agent.

14. The fire or flame resistant material of claim 12 wherein said polymeric material consists of 70-100 parts by weight ethylene-ethyl acrylate copolymer and 20 -40 parts by weight synthetic rubber and wherein said lubricating agent consists of 8-12 parts by weight polyisobutylene and 6-12 parts by weight paraffin wax.

15. A method for producing the fire or flame resistant material of claim 12 comprising mixing the components thereof, essentially in powder form, to produce a loose admixture, at a temperature of about 30°C, extruding the resulting admixture at a temperature of about 130°C, cooling the extrudate and subdividing the extrudate into granules for storage at ambient temperature.

16. The material of claim 1 in granular form.


**Patentansprüche**

1. Im wesentlichen halogenfreies feuer- oder flammenbeständiges Material mit einer organischen Polymermatrix, 50 bis 450 Gew.-Teilen eines Aluminiumhydroxid enthaltenden Füllmateriales pro 100 Teilen der Matrix und 100 bis 600 Gew.-Teilen eines aus Calciumcarbonat und Calcium-Magnesiumcarbonat ausgewählten Materials pro 100 Teilen der Matrix.

2. Feuer- oder flammenbeständiges Material nach Anspruch 1, wobei die organische Matrix Ethylen-ethylacrylat-Copolymer enthält.

3. Feuer- oder flammenbeständiges Material nach Anspruch 1 oder 2, welches auch 30 bis 40 Gew.-Teile eines Schmiermittels und/oder eines Weichmachers und/oder eines Trocknungsmittels und/oder eines Färbemittels und/oder eines Antioxidans pro 100 Teile des Copolymers enthält.

4. Feuer- oder flammenbeständiges Material nach Anspruch 2 oder 3, wobei das Schmiermittel Paraffinwachs in einer Menge von ungefähr 10 Gew.-Teilen pro 100 Teilen des Copolymers enthält, das Trocknungsmittel eine Mischung aus Calciumoxid und Wachs in einer Menge von ungefähr 11 Gew.-Teilen pro 100 Teilen des Copolymers enthält, der Weichmacher Ethylenpropengummi in einer Menge von ungefähr 11 Gew.-Teilen pro 100 Teilen des Copolymers enthält, das Färbemittel Ruß in einer Menge von ungefähr 1 Gew.-Teil pro 100 Teilen des Copolymers enthält und das Antioxidans Polytrimethyldihydrochinolin in einer Menge von ungefähr 1,5 Gew.-Teilen pro 100 Teilen des Copolymers enthält.

5. Feuer- oder flammenbeständiges Material nach einem der vorangehenden Ansprüche, wobei das Füllmaterial auch ein organisches Dehnungsmittel enthält.

6. Im wesentlichen halogenfreies steifes feuer- oder flammenbeständiges Material, welches pro 100 Teilen einer organischen Matrix 50 bis 450 Gew.-Teile eines Aluminiumhydroxide enthaltenden Füllmaterials, 100 bis 600 Gew.-Teile eines aus Calciumcarbonat und Calcium-Magnesiumcarbonat ausgewählten Materials, 8 bis 15 Gew.-Teile eines Schmiermittels, 8 bis 15 Gew.-Teile eines Weichmachers, 10 bis 15 Gew.-Teile eines Trocknungsmittels, 1 bis 2 Gew.-Teile eines Färbemittels und 0 bis 1,5 Gew.-Teile eines Antioxidans enthält.

7. Steifes feuer- oder flammenbeständiges Material nach Anspruch 6, welches 100 Teile von Ethylen-ethylacrylat-Copolymer als Matrix, 220 Gew.-Teile Aluminiumhydroxid als Füllmittel, 220 Gew.-Teile Calciumcarbonat, 10 Gew.-Teile eines Schmiermittels, 11 Gew.-Teile eines Weichmachers, 11 Gew.-Teile eines Trocknungsmittels, 1- Gew.-Teil eines Färbemittels und 1,5 Gew.-Teile eines Antioxidans enthält.

8. Im wesentlichen halogenfreies flexibles feuer- oder flammenbeständiges Material, welches pro 100 Teile einer organischen Matrix 130 bis 170 Gew.-Teile eines Aluminiumhydroxid enthaltenden Füllmaterials, 130 bis 170 Gew.-Teile eines aus Calciumcarbonat und Calcium-Magnesiumcarbonat ausgewählten Materials, 8 bis 15 Gew.-Teile eines Schmiermittels, 25 bis 40 Gew.-Teile eines Weichmachers, 10 bis 15 Gew.-Teile eines Trocknungsmittels, 1 bis 2 Gew.-Teile eines Färbemittels und 0 bis 1,5 Gew.-Teile eines Antioxidans enthält.

9. Im wesentlichen halogenfreies feuer- oder flammenbeständiges Material, welches 80 Gew.-Teile Ethylen-ethylacrylat-Copolymer, 30 Gew.-Teile synthetischen Gummi, 10 Gew.-Teile Polyisobutylen, 10 Gew.-Teile Paraffinwachs, 11 Gew.-Teile Calciumoxid, 1 Gew.-Teil Ruß, 150 Gew.-Teile Aluminiumhydroxid und 150 Gew.-Teile Calciumcarbonat enthält.

10. Verfahren zur Herstellung eines feuer- oder flammenbeständiges Materials nach Ansprüch 1, welches ein Mischen der Komponenten in trockenem Zustand bei Umgebungstemperatur, ein Strangpressen der resultierenden Mischung bei einer Schmelztemperatur von ungefähr 150 bis 200°C zur Bildung eines Strangpreßgutes in endloser Form und ein Teilen dieses endlosen Strangpreßgutes umfaßt.

11. Verfahren zur Herstellung eines feuer- oder flammenbeständiges Überzuges für gegen Feuer zu schützende Gegenstände, welches ein Strangpressen des geteilten Strangpreßproduktes nach Anspruch 10 bei einer Temperatur von 150 bis 200°C in die gewünschte Form umfaßt.

12. Im wesentlichen halogenfreies feuer- oder flammenbeständiges Material, welches 90 bis 140 Gew.-Teile eines Polymermaterials, 14 bis 24 Gew.-Teile eines Schmiermittels, 8 bis 13 Gew.-Teile von Calciumoxid, 140 bis 160 Gew.-Teile Calciumcarbonat und 140 bis 160 Gew.-Teile Aluminiumhydroxid enthält.

13. Feuer- oder flammenbeständiges Material nach Anspruch 12, welches auch einen wesentlichen Anteil eines Färbemittels enthält.

14. Feuer- oder flammenbeständiges Material nach Anspruch 12, wobei das Polymermaterial aus 70 bis 100 Gew.-Teilen Ethylenethylacrylat-Copolymer und 20 bis 40 Gew.-Teilen synthetischen Gummi besteht und wobei das Schmiermittel aus 8 bis 12 Gew.-Teilen Polyisobutylen und 6 bis 12 Gew.-Teilen Paraffinwachs besteht.

15. Verfahren zur Herstellung eines feuer- oder flammenbeständiges Materials nach Anspruch 12, welches ein Mischen der Komponenten in im wesentlichen pulverförmiger Form zur Herstellung einer losen Mischung bei einer Temperatur von ungefähr 30°C, ein Strangpressen der resultierenden Mischung bei einer Temperatur von ungefähr 130°C, ein Abkühlen des Strangpreßproduktes und ein Teilen des Strangpreßproduktes in Körnchen zur Lagerung bei Umgebungstemperatur umfaßt.

16. Material nach Anspruch 1 in körniger Form.


**Revendications**

1. Matériau résistant au feu ou à la flamme essentiellement dépourvu d'halogène comprenant une matrice de polymère organique, 50 à 450 parties en poids d'une matière de charge comprenant de l'hydroxyde d'aluminium pour 100 parties de ladite matrice et 100 à 600 parties en poids d'une matière choisie parmi le carbonate de calcium et le carbonate de calcium-magnésium pour 100 parties de ladite matrice.

2. Matériau résistant au feu ou à la flamme selon la revendication 1 dans lequel ladite matrice organique comprend un copolymère d'éthylène et d'acrylate d'éthyle.

3. Matériau résistant au feu ou à la flamme selon l'une des revendications 1 et 2 qui comprend également 30 à 40 parties en poids d'un ou plusieurs d'un agent lubrifiant, d'un agent d'élasticité, d'un agent déshydratant, d'un agent de coloration et de résistance au vieillissement et d'un agent antioxydant pour 100 parties dudit copolymère.

4. Matériau résistant au feu ou à la flamme selon l'une des revendications 2 ou 3 dans lequel ledit agent lubrifiant comprend une cire paraffinique présente en une quantité d'environ 10 parties en poids pour 100 parties dudit copolymère, ledit agent déshydratant comprend un mélange d'oxyde de calcium et de cire présent en une quantité d'environ 11 parties en poids pour 100 parties dudit copolymère, ledit agent d'élasticité comprend un caoutchouc d'éthylène-propène présent en une quantité d'environ 11 parties en poids pour 100 parties dudit copolymère, ledit agent de coloration-résistance au vieillissement comprend du noir de carbone présent en une quantité d'environ 1 partie en poids pour 100 parties dudit copolymère et ledit agent antioxydant comprend une polytriméthyldihydroquinoléine présente en une quantité d'environ 1,5 partie en poids pour 100 parties dudit copolymère.

5. Matériau résistant au feu ou à la flamme selon l'une quelconque des revendications précédentes dans lequel ladite matière de charge comprend également un agent organique d'expansion.

6. Matériau résistant au feu ou à la flamme rigide et essentiellement dépourvu d'halogène comprenant pour 100 parties d'une matrice organique 50 à 450 parties en poids d'une matière de charge comprenant de l'hydroxyde d'aluminium, 100 parties à 600 parties en poids d'une matière choisie parmi le carbonate de calcium et le carbonate de calcium-magnésium, 8 à 15 parties en poids d'un agent lubrifiant, 8 à 15 parties en poids d'un agent d'élasticité, 10 à 15 parties en poids d'un agent déshydratant, 1 à 2 parties en poids d'un agent colorant et 0 à 1,5 partie en poids d'un antioxydant.

7. Matériau rigide résistant au feu ou à la flamme selon la revendication 6 comprenant 100 parties de copolymère d'éthylène-acrylate d'éthyle comme matrice, 220 parties en poids d'hydroxyde d'aluminium comme charge, 220 parties en poids de carbone de calcium, 10 parties en poids d'un lubrifiant, 11 parties en poids d'un agent d'élasticité, 11 parties en poids d'un agent déshydratant, 1 partie en poids d'un agent colorant et 1,5 partie en poids d'un antioxydant.

8. Matériau résistant au feu ou à la flamme souple et essentiellement dépourvu d'halogène comprenant pour 100 parties d'une matrice organique, 130 à 170 parties en poids d'une matière de charge comprenant de l'hydroxyde d'aluminium, 130 à 170 parties en poids d'une matière choisie parmi le carbonate de calcium et le carbonate de calcium-magnésium, 8 à 15 parties en poids d'un agent lubrifiant, 25 à 40 parties en poids d'un agent d'élasticité, 10 à 15 parties en poids d'un agent déshydratant, 1 à 2 parties en poids d'un agent colorant et 0 à 1,5 partie en poids d'un antioxydant.

9. Matériau résistant au feu ou à la flamme essentiellement dépourvu d'halogène comprenant 80 parties en poids d'un copolymère d'éthylène-acrylate d'éthyle, 30 parties en poids d'un caoutchouc synthétique, 10 parties en poids de polyisobutylène, 10 parties en poids d'une cire de paraffine, 11 parties en poids d'oxyde de calcium, 1 partie en poids de noire de carbone, 150 parties en poids d'hydroxyde d'aluminium et 150 parties en poids de carbonate de calcium.

10. Procédé pour produire un matériau résistant au feu ou à la flamme conforme à la revendication 1 comprenant le mélange à sec de ses composants à la température ambiante, l'extrusion du mélange obtenu à une température de fusion d'environ 150 à 200°C pour former des extrudats sous une forme continue et la fragmentation desdits extrudats continus.

11. Procédé pour la production d'un revêtement résistant au feu ou à la flamme pour des articles à protéger contre le feu comprenant l'extrusion du produit extrudé fragmenté de la revendication 10 à une température d'environ 150 à 200°C sous une forme désirée.

12. Matériau résistant au feu ou à la flamme essentiellement dépourvu d'halogène comprenant 90 à 140 parties en poids d'une matière polymère, 14 à 24 parties en poids d'un agent lubrifiant, 8 à 13 parties en poids d'oxyde de calcium, 140 à 160 parties en poids de carbonate de calcium et 140 à 160 parties en poids d'hydroxyde d'aluminium.

13. Matériau résistant au feu ou à la flamme selon la revendication 12 qui comprend également une quantité efficace d'un agent de coloration et de résistance au vieillissement.

14. Matériau résistant au feu ou à la flamme selon la revendication 12 dans lequel ladite matière polymère est constituée de 70 à 100 parties en poids de copolymère d'éthylène-acrylate d'éthyle, 20 à 40 parties en poids de caoutchouc synthétique et dans lequel ledit agent lubrifiant est constitué de 8 à 12 parties en poids de polysiobutylène et 6 à 12 parties en poids de cire paraffinique.

15. Procédé pour la production du matériau résistant au feu ou à la flamme selon la revendication 12 comprenant le mélange de ses composants, essentiellement sous forme d'une poudre, pour produire un mélange lâche à une température d'environ 30°C. L'extrusion du mélange obtenu à une température d'environ 130°C, le refroidissement de l'extrudat et la fragmentation de l'extrudat en granules pour le stockage à la température ambiante.

16. Materiau selon la revendication 1, sous forme granulaire.